# EUROPÄISCHE PATENTANMELDUNG

(11) **EP 1 568 268 A1**
(43) Veröffentlichungstag der Anmeldung: **31.08.2005**
(21) Anmeldenummer: 04011259.1
(22) Anmeldetag: 10.05.2004
(51) Int. Cl.: A01G 7/06, B27K 3/10

(54) **Verfahren zum Injizieren von Bäumen und das zugehörige Gerät**

(30) Priorität: 26.02.2004 DE
(71) Anmelder: Jakobs, Wolfgang, 66798 Wallerfangen (DE)
(72) Erfinder: Jakobs, Wolfgang, 66798 Wallerfangen (DE)

(57) **Zusammenfassung**

Erkrankte Bäume oder Teile von Bäumen werden durch Injektion von geeigneten Nähr- oder Schutzmitteln behandelt. Die Erfindung beschreibt ein Injektionsgerät insbesondere bestehend aus einer sich selbst abdichteten Injektionskanüle. Diese kann in eine vergrößerte Kembohrung oder Bohrung eingeführt werden. Dann können Nähr- und Schutzmittel in den erkrankten Baum injiziert werden.

## Beschreibung

Die Erfindung betrifft eine Injektionsmaschine für Stammholz.

Die Behandlung von Bäumen mit Fungiziden, Insektiziden, Akariziden sowie Nährlösungen erfordert in der Regel relativ große Mengen der jeweiligen Substanz, wobei die Wirkung im Boden-, Laub- oder Holzbereich bedingt durch Witterungs- oder Umweltfaktoren von begrenzter Dauer und mit oft geringem Erfolg, jedoch mit großer Umweltbelastung, ist.

Die bisherigen Verfahrensvorschläge wie EP 0111254A1, US 5046281, US 5239773A US 4505067, US 4110933A, DE 19712693C1, DE 69308773T2, DE 4440528C2 und DE 3942368A1 zum Injizieren oder Impfen von Bäumen sind bis heute mit geringem Behandlungserfolg kaum geeignet, da alle Verfahren darauf abgestimmt sind, im Bereich des gesunden intakten Holzes zu arbeiten.

Aufgabe der Erfindung ist es deshalb, eine Methode und die dazugehörigen Instrumente zu entwickeln, mit der die geschädigten Holzbereiche behandelt werden können.

Erfindungsgemäß wird diese Aufgabe dadurch gelöst, dass flüssige Substanzen mit Hilfe einer sich selbst abdichtenden Injektionskanüle in den geschädigten Holzbereich des Baumes eingebracht werden. Bei der Baumuntersuchung werden bekannterweise Kernbohrungen durchgeführt. Erfindungsgemäß wird der somit vorhandene Kernbohrkanal am Eingang etwas erweitert, so dass die Injektionskanüle eingeführt werden kann. Die Injektionskanüle besteht aus zwei Rohrzylindern (1,2), die mit Hilfe einer Gewindepressung (3,7) einen dazwischenliegenden elastischen Zylinder (Nr.4) dazu bringen, den Bohrkanal (9) abzudichten. Mittels einer Pumpe (10), die elektronisch gesteuerte Impulsschübe von 0,05 bis 80 bar Druck abgibt, wird die flüssige Substanz durch eine flexible Rohr- oder Schlauchleitung (6) in beliebiger Länge, welche durch ein Verbindungselement (8) an der Injektionskanüle (Versorgungsbohrung 5) befestigt ist, vom Vorratsbehälter (10) zum Injektionspunkt befördert.

Die jeweils erforderliche Substanz wird in flüssiger Form in die bei der Bohrkemuntersuchung lokalisierten Hohlräume und Pilzkavernen gepumpt. Dies ist durch alle Wallzonen axial, radial und tangential möglich. Voraussetzung ist eine Erkrankung durch Pilze oder Bakterien, sowie Rissbildungen durch mechanische Einwirkungen, welche die erforderlichen Hohlräume hinterlassen.

Mit dieser Methode ist es möglich geschädigte Stämme, Äste und Wurzeln von Bäumen mit physiologischen Flüssigkeiten, Insektiziden oder Fungiziden zu behandeln.

Ein weiterer Vorteil des Verfahrens ist es, dass nach der Behandlung in Bezug auf das Volumen der verwendeten Injektionsflüssigkeit sehr genau das erkrankte "Holzvolumen" bestimmt werden kann.

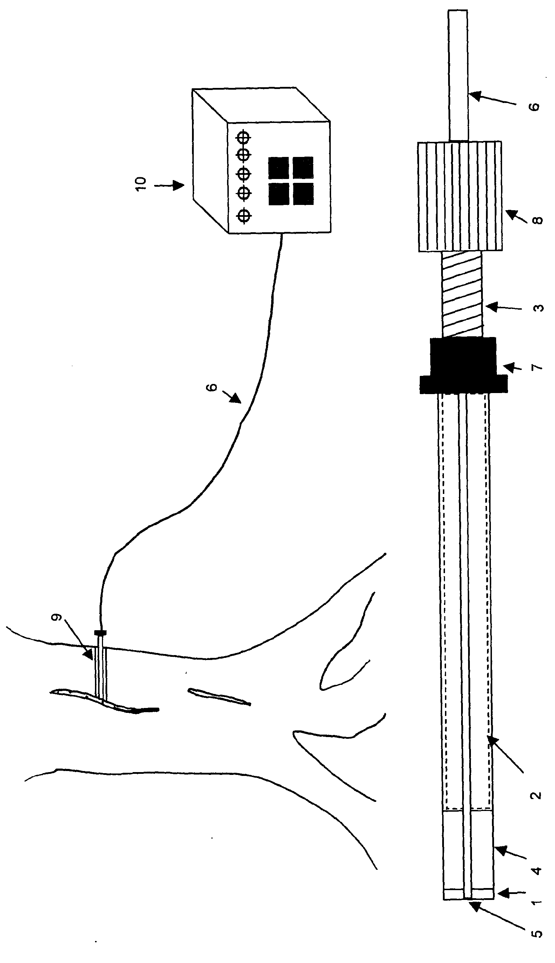

## Patentansprüche

1. Injektionskanüle zur Pflege erkrankter Bäume und Teile von Bäumen, **dadurch gekennzeichnet dass**
- sie aus zwei Rohrzylinder (1,2) besteht, mit Hilfe einer Gewindepressung (3,7) einen dazwischenliegenden elastischen Zylinder (4) dazu bringen, den Bohrkanal (9) abzudichten,
- sie eine flexible Rohr- oder Schlauchleitung (6) enthält, durch die in beliebiger Länge die Flüssigkeit(en) über die Versorgungsbohrung (5) vom Vorratsbehälter (10) zum Injektionspunkt befördert werden.

2. Verfahren zur Pflege erkrankter Bäume und Teile von Bäumen mit einer Injektionskanüle **dadurch gekennzeichnet, dass**
- die Öffnung eines bereits als Kembohrung Vorhandenen Bohrkanals (9) etwas erweitert wird,
- in die erweiterte Öffnung der Kembohrung die Injektionskanüle aus Anspruch 1 eingeführt wird,
- die Injektionskanüle im Stamm oder Ast arretiert wird und
- Flüssigkeit(en) zur Behandlung des Stammes oder der Äste mittels der Injektionskanüle in diese eingepumpt werden.

3. Verfahren nach Anspruch 2 **dadurch gekennzeichnet, dass** die Flüssigkeit eine physiologische Flüssigkeit ist.

4. Verfahren nach Anspruch 2 **dadurch gekennzeichnet, dass** die Flüssigkeit schädlings- und pilzbekämpfende Substanzen enthält.

5. Verfahren nach Anspruch 2 **dadurch gekennzeichnet, dass** die Flüssigkeit Fungizide oder Insektizide enthält.
